# EUROPEAN PATENT SPECIFICATION

(11) **EP 2 957 546 B1**
(45) Date of publication and mention of the grant of the patent: **14.09.2016**
(21) Application number: 15168319.0
(22) Date of filing: 20.05.2015
(51) Int. Cl.: C04B 28/02, C04B 14/30, C04B 14/36, B01J 21/02, B01J 35/00, C04B 111/20

(54) **SELF CLEANING AND AIR CLEANING CEMENT**
SELBSTREINIGENDER UND LUFTREINIGENDER ZEMENT
CIMENT AUTONETTOYANT ET NETTOYANT D'AIR

(30) Priority: 13.06.2014 TR 201406890
(43) Date of publication of application: 23.12.2015
(73) Proprietor: Adana Cimento Sanayii T.A.S., 01321 Adana (TR)
(72) Inventor: Uysal, Aykut, 01321 ADANA (TR)
(74) Representative: Karaahmet, Erdogan

(56) References cited:
- EP-A2- 2 518 035
- WO-A1-2008/079756
- WO-A1-2013/018111
- WO-A1-2014/014428
- US-A1- 2013 266 370
- MEHMET LÜTFI YOLA ET AL: "A novel efficient photocatalyst based on TiO2 nanoparticles involved boron enrichment waste for photocatalytic degradation of atrazine", CHEMICAL ENGINEERING JOURNAL, vol. 250, 18 April 2014 (2014-04-18), pages 288-294, XP55224597, CH ISSN: 1385-8947, DOI: 10.1016/j.cej.2014.03.116
- Osman Gencel ET AL: "An investigation on the concrete properties containing colemanite", International Journal of Physical Sciences, 1 March 2010 (2010-03-01), pages 216-225, XP055224683, Retrieved from the Internet: URL:http://www.academicjournals.org/app/we broot/article/article1380723281_Gencel et al.pdf [retrieved on 2015-10-30]

## Description

### Technical Field

The invention is related to a method which ensures that, the self cleaning and air cleaning process of the cement, is performed in a cost effective way, by means of adding nano titanium dioxide (TiO₂) and colemanite; which is a mineral of boron in addition to the titanium dioxide (TiO₂) into the cement used as construction material for concrete.

### Background of the I nvention (Prior Art)

Cement which is one of the construction materials that is used in several different application fields in daily life, plays a crucial role in different types of structures. The external view of the concrete structures, depending on the usage of cement which has an extensive usage field, deteriorate and change colour and become dirty in time as they are used for many years, due to the organic compounds that are present on the surfaces of said concrete. In order to overcome this, nano titanium dioxide (TiO₂) in the form of anastase having photo catalytic characteristics is added into the concrete mix and it is enabled for the concrete to stay the same colour and texture by separating the contaminants that cover the concrete during its usage life, without the concrete losing its aesthetic characteristics. In this concrete technology called self cleaning concrete, the photo catalytic reactions separate the contaminants from the surface and prevent the permanent adhesion of said contaminants to the surface. Moreover this method converts the NOₓ compounds that cause air pollution into harmless NO₃ compounds. Thereby dirt repellent surfaces are obtained and the harmful compounds in the air are rendered harmless.

According to the invention subject to the application numbered US2013266370 (A1) within the known state of the art, nano titanium dioxide (TiO2) in the form of anastase having photo catalytic characteristics that provide air cleaning characteristics and self cleaning characteristics to cement products are preferred. As nano titanium dioxide (TiO2) in the form of anastase is a material that is very expensive, the cost of the production of cement is significantly increased when said dioxide is added into the cement.

According to another document within the known state of the art numbered JP2005139010 (A), it is described that the cement used in the construction sector has anti bacterial and anti fungal properties. The usage of colemanite is described in this document in order to ensure that the environment is safer, better and less polluted. However the characteristic that is achieved is the anti microbial characteristic and it has not been mentioned in this document if the cement has photo catalytic characteristics or not. Moreover inside the mixture prepared, granule calcium aluminate, high oven clinker, fly ash, silica fume, and inorganic salts are present in addition to colemanite. It has been mentioned that titanium dioxide (TiO₂) could be present inside these materials having calcium aluminate content as an impurity. This compound that is possibly present inside the mixture as an impurity is not "anastase formed nano titanium dioxide" (TiO₂).

Document EP2518035 (A) describes a white or coloured concrete with architectural high performances and self-cleaning properties comprising nano-anatase.

The usage of photo catalytic cement products in the construction sector is very limited due to high costs. Therefore nano titanium dioxide (TiO2) in the form of anastase is not cost effective due to high costs and its usage is not preferred. Studies have been carried out for many years in order to decrease costs.

The self cleaning and air cleaning characteristic of the concrete is maintained by the addition of an amount of colemanite into the cement according to the self cleaning and air cleaning cement invention and the usage of the nano titanium dioxide (TiO2) in the form of anastase is reduced to 2%. As a result production which is approximately 37% cheaper can be carried out.

### The aim and brief description of the Invention

An aim of the present invention is to decrease the nano titanium dioxide (TiO2) in the form of anastase amount and to use colemanite instead, which is a mineral of the boron element.

Another aim of the present invention is to decrease the nano titanium dioxide (TiO2) in the form of anastase and thereby to reduce the costs of cement products.

Another aim of the present invention is to increase the usage of cement in the construction sector by means of the decreased production costs and to obtain cleaner air via environment friendly construction products.

### Detailed description of the Invention

Our country is rich in terms of boron. Waste product is obtained during the processing of the product that is extracted from boron mines. In the case that these waste products are beneficial to cement, their usage in cement production is important in terms of utilizing waste products and providing economic benefits. The studies conducted in relation to the usage of boron waste in cement have been performed initially in order to utilize waste products and this has been followed by the development of using colemanite in cement production. The importance of these studies for our country is significant as 72% of the world's boron mineral reserves are located in Turkey. The national Boron research institute (BOREN) in Turkey is trying to popularize the usage field of the boron mineral. As a result of the experimental studies carried out, it has been perceived that colemanite improves the cement characteristics, and increases concrete characteristics as it increases the resistance, durability and permeability of concrete. Moreover the production of boron cement with colemanite mineral and the usage of said cement in order to produce concrete and to use said cement in the construction of roads, houses etc are among the studies that are being carried out

The invention subject to the application is related to increasing the usage of self cleaning and air cleaning cement, by adding colemanite, which is a mineral of the boron element into the cement mixture and by the adding nano titanium dioxide (TiO2) in the form of anastase which is one of the elements within the components of the invention, and the invention is also related to decreasing production costs by eliminating the problem of quality.

The usage of cement based products in various constructions is carried out by hardening and setting of the cement via the addition of water. Self cleaning and air cleaning cement; namely white or gray cement, subject to the invention is formed of granulated colemanite which is a mineral of the boron element and of nano titanium dioxide (TiO2) in the form of anastase.

The cement within the present invention comprises 80-85% white or gray clinker by mass, 0-5% by mass of limestone, 10-12% of gypsum, 10-12% granulated colemanite which is a mineral of the boron element and 2-3% nano titanium dioxide (TiO2) in the form of anastase.

The cement subject to the present invention is produced by adding granulated colemanite which is a mineral of the boron element and nano titanium dioxide (TiO2) in the form of anastase into the white or gray cement produced in compliance with the "TS EN 197-1 General Cements" standard and by mixing the cement with a mixer.

The present invention can be used in all concrete reinforced structures whose surfaces are desired to stay clean, in pavements, roads or tunnels in order to decrease the air pollution created by the exhaust gasses of vehicles, in hygienic environments such as hospitals or surgery rooms which are highly prone to the reproduction of bacteria, and in crowded places such as schools or the subway, or in stock breading facilities such as poultry farms. Moreover it can also be used in places which are prone to the reproduction of bacteria and fungi due to their high humidity rates.

### EXAMPLES

### Example 1 (White cement)

% 80,9 White clinker
% 3,5 Limestone
% 2,6 Gypsum
% 10,0 Colemanite
% 3,0 Anastase formed nano TiO2.

### Example 2 (Gray cement)

% 81,0 White clinker
% 3,0 Limestone
% 3,0 Gypsum
% 10,0 Colemanite
% 3,0 Anastase formed nano TiO₂

## Claims

1. Self cleaning and air cleaning cement, **characterized in that** it comprises;
• White or gray clinker
• Limestone
• Gypsum
• Granulated colemanite
• Anastase formed Nanotitanium dioxide (TiO₂).

2. Cement according to claim 1, **characterized in that** it comprises by mass,
• % 80-85 White or gray clinker
• % 0-5 Limestone
• % 2-5 Gypsum
• % 10-12 granulated colemanite
• % 2-3 nano titanium dioxide (TiO2) in the form of anastase

3. Cement according to claim 2, **characterized in that** it comprises % 80,9 White clinker % 3,5 Limestone % 2,6 Gypsum % 10,0 Colemanite % 3,0 Anastase formed nano TiO₂ by mass.

4. Cement according to claim 2, **characterized in that** it comprises % 81,0 White clinker % 3,0 Limestone % 3,0 Gypsum % 10,0 Colemanite % 3,0 Anastase formed nano TiO₂ by mass.

## Patentansprüche

1. Zement, der eine Selbstreinigung und Luftreinigung beinhaltet, **dadurch gekennzeichnet, dass** er umfasst:
• Weiß oder Grauklinker
• Kalkstein
• Gips
• Boden Colemanit
• Nano Titanium Dioxide (TiO₂) erstellt mit Anastasia.

2. Zement nach Anspruch 1, **dadurch gekennzeichnet, dass** es die folgenden umfasst:
• 80 bis 85% Weiß oder Grauklinker
• 0 bis 5% Kalkstein
• 2 bis 5% Gips
• 10 bis 12% Boden Colemanit
• 2 bis 3% Nano Titanium Dioxide (TiO₂) erstellt mit Anastasia

3. Zement nach Anspruch 2, **dadurch gekennzeichnet, dass** es 80,9% Weißklinker, 3,5% Kalkstein, 2,6 Gips, 10,0 Colemanit, mit 3,0% Anastasia gefertigten nano TiO₂ umfasst.

4. Zement nach Anspruch 2, **dadurch gekennzeichnet, dass** es 81,0% Weißklinker, 3,0% Kalkstein, 3,0 Gips, 10,0 Colemanit, mit 3,0% Anastasia gefertigten nano TiO₂ umfasst.

## Revendications

1. Ciment autonettoyant et épurateur d'air **caractérise en ce qu'**il comprend les suivants
• Clinker blanc ou gris
• Calcaire
• Plâtre
• Colemanite broyé
• Dioxyde de nano-titane (TiO₂).formé par l'anastasis

2. : Ciment selon la revendication 1 **caractérisé en ce qu'**il comprend en masse les suivants :
• Clinker blanc ou gris de l'ordre de 80-85%
• Calcaire de l'ordre de 0-5%
• Plâtre de l'ordre de 2-5%
• Colemanite broyé de 'ordre de 10-12%
• Dioxyde de nano-titane (TiO₂).de l'ordre de 2-3% formé par l'anastasis

3. Ciment selon la revendication 2, **caractérisé en ce qu'**il comprend du clinker blanc de l'ordre de 80,9% en masse, du calcaire de d'ordre de 3,5% en masse, du plâtre de l'ordre de 2,6% en masse, du colemanite de l'ordre de 10,0%, et du dioxyde de nano-titane (TiO₂) de l'ordre de 3,0% en masse formé par l'anastasis.

4. Ciment selon la revendication 2, **caractérisé en ce qu'**il comprend du clinker blanc de l'ordre de 81,0% en masse, du calcaire de d'ordre de 3,0% en masse, du plâtre de l'ordre de 3,0% en masse, du colemanite de l'ordre de 10,0%, et du dioxyde de nano-titane (TiO₂) de l'ordre de 3,0% en masse formé par l'anastasis.
